# EUROPÄISCHE PATENTANMELDUNG

(11) **EP 1 719 473 A2**
(43) Veröffentlichungstag der Anmeldung: **08.11.2006**
(21) Anmeldenummer: 06012621.6
(22) Anmeldetag: 15.12.1999
(51) Int. Cl.: A61C 8/00

(54) **Werkzeug zum Einschrauben eines Montagesatz mit einem Dentalimplantat**

(30) Priorität: 23.12.1998 DE 19860060
(62) Teilanmeldung aus: 99124982.2
(71) Anmelder: BEGO Implant Systems GmbH & Co. KG, 28359 Bremen (DE)
(72) Erfinder: Rose, Ingo, 28355 Bremen (DE); Erlenmayer, Udo, 28865 Lilienthal (DE)
(74) Vertreter: Birken, Lars

(57) **Zusammenfassung**

Bei einem aus einem Dentalimplantat und einem Einbringpfosten gebildeten Montagesatz weist der Einbringpfosten einen zylindrischen Abschnitt und eine anschließende Schulter auf, mit denen der Montagesatz in einem verengten Abschnitt eines Aufnahmegefäßes gehalten werden kann. Ein sich an die Schulter in Entnahmerichtung anschließender Bereich des Einbringpfostens dient zur reibschlüssigen und/oder formschlüssigen Verbindung mit einem Werkzeug zum Entnehmen des Montagesatzes aus dem Aufnahmegefäß und zum Einsetzen des Implantats in eine Kieferbohrung.

Das vorzugsweise aus einem Glasrohr bestehende Aufnahmegefäß ist in Höhe der Halterung radial umlaufend eingezogen und an beiden Seiten durch Verschlußstopfen verschlossen. Das der Entnahme und dem Einschrauben des Montagesatzes dienende Werkzeug weist einen rohrförmigen Abschnitt mit einem Schlüssel-Sechskant am freien Ende der Innenwand und anschließend einen Rohrinnendurchmesser auf, der bei Wirkverbindung mit dem Einbringpfosten einen Reibschluß mit diesem herstellt.

Das Verfahren zum Einsetzen des Montagesatz-Implantats zeichnet sich dadurch aus, daß nach Entfernung des entnahmeseitigen Verschlußstopfens des Aufnahmegefäßes das Werkzeug über den Einbringpfosten geführt und mit diesem in Reib- und Formschluß gebracht wird, daß hierauf der Montagesatz mit dem Werkzeug aus dem Aufnahmegefäß herausgezogen und in die Kieferbohrung eingeschraubt wird, wonach die Schraubverbindung zwischen dem Implantat und dem Einbringpfosten gelöst und der Einbringpfosten abgezogen wird.

## Beschreibung

Die Erfindung betrifft einen Montagesatz mit einem Dentalimplantat zur Befestigung von Zahnersatz am Kiefer, bei dem das Implantat mittels einer zentrischen Verschraubung mit einem Einbringpfosten verbunden ist, welcher Mittel zu seiner Halterung in einem das Implantat konzentrisch umgebenden Aufnahmegefäß aufweist, die aus einem zylindrischen Abschnitt und einer in Entnahmerichtung anschließenden Schulter bestehen, welch letztere in Anlage an einen Ringbund des Aufnahmegefäßes formschlüssig anlegbar ist, wobei sich weiter in Entnahmerichtung an die Schulter ein Bereich des Einbringpfostens anschließt, der mit einem dem Einsetzen des Implantats dienenden Werkzeug in zugleich drehfesten Formschluß und axialen Reib- und/oder Formschluß bringbar ist. Sie betrifft ferner ein solches Aufnahmegefäß und ein Werkzeug sowie ein Verfahren zur Entnahme des Montagesatzes aus dem Aufnahmegefäß und zu seinem Einsetzen in den Kiefer.

Bei einem bekannten Montagesatz besteht der Einbringpfosten aus einem Bauteil, welches etwa in der Mitte seiner Längserstreckung zwischen zwei Ringbunden einen O-Ring trägt, der die Ringbunde radial überragt und gegenüber einem rohrförmigen, an einem Ende verschlossenen Aufnahmegefäß abdichtet, wenn er in dieses eingesetzt ist. Auf den dem geschlossenen Ende des Aufnahmegefäßes zugewandten Ringbund folgt ein zylindrischer Ansatz, dessen Durchmesser größer ist als der des Implantats, welches von der im Innern des Einbringpfostens versenkten Schraube gegen ihn gezogen wird; zugleich dient der Ansatz als Führung für ein ihn und das Implantat umgebendes Röhrchen, das zwischen dem dem Ansatz benachbarten Ringbund und dem geschlossenen Ende des Aufnahmegefäßes gehalten ist und das Implantat insbesondere während jeglichen Transports bis zur Entnahme des Montagesatzes aus dem Aufnahmegefäß schützt. Das Röhrchen besteht ebenso wie der Einbringpfosten (und das Implantat selbst) regelmäßig aus Titan, also einem teuren Werkstoff.

Der andere Ringbund befindet sich, wenn der Montagesatz im Aufnahmegefäß aufgenommen ist, in der Nähe dessen offenen Endes. An ihn schließt sich vor allem ein zur Aufnahme eines mit ihm drehfest in Eingriff bringbaren Drehschlüssels geeigneter Bereich an; dieser Bereich befindet sich bereits außerhalb des Aufnahmegefäßes. Bis kurz vor dem Einsetzen des Implantats ist das Aufnahmegefäß mit dem darin befindlichen, aber mit einem Teil des Einbringpfostens aus ihm herausragenden Montagesatz in ein ebenfalls rohrförmiges Transportgehäuse eingeschoben, welches ebenso wie das Aufnahmegefäß aus Kunststoff besteht. Es ist ebenfalls rohrförmig und an einem Ende verschlossen, während das andere Ende von einem lösbaren, aber bis zum Gebrauch versiegelten Deckel verschlossen ist. Am Boden des Transportgehäuses befindet sich zwischen diesem und dem Boden des Aufnahmegefäßes ein ebenfalls gefäßförmiger Halter für die Verschlußschraube, welche nach dem Einschrauben des Implantats dessen Aufnahmebohrung für die Zahnprothese verschließt, bis das Implantat eingewachsen ist.

Diese bekannte Art der Unterbringung und Halterung des Montagesatzes im Aufnahmegefäß sowie dessen Unterbringung im Transportgehäuse hat sich zwar bewährt, befriedigt aber nicht alle Ansprüche. Zum einen ist der Materialaufwand für den Einbringpfosten, bei dem es sich um ein Wegwerfprodukt handelt, relativ hoch. Zum anderen erfordert die geschilderte Konstruktion einen großen Durchmesser des Einbringpfostens, der vor allem bei engen Zahnständen das Einschrauben des Implantats mit dem Einbringpfosten erschwert oder gar unmöglich macht. Schließlich ist auch das Schutzröhrchen für das Implantat ein Wegwerfprodukt, welches wegen des teuren Werkstoffes zusätzlich zu Buche schlägt, und überdies bedarf die Entnahme des Montagesatzes aus dem Aufnahmegefäß (nach dem Öffnen des Außengehäuses) einer mehrschrittigen Arbeitsfolge, welche die Arbeitszeit des Zahnarztes beim Einsetzen des Implantats verlängert und das Risiko hervorruft, daß die Anästhesiezeit nicht ausreicht. Zu allem kommt hinzu, daß die Sterilisierung des Montagesatzes sich auf den unterhalb des O-Rings befindlichen Raum im Aufnahmegefäß beschränkt, der auf der anderen Seite des O-Rings befindliche Teil des Einbringpfostens also nicht sterilisiert ist und überdies die Gefahr besteht, daß die Sterilisierung im Implantatbereich durch Leckagen am O-Ring vorbei aufgehoben wird. Darüber hinaus befindet sich die Verschlußschraube ebenfalls außerhalb des Aufnahmegefäßes im Außengehäuse.

Aus der US-PS 5 062 800 ist ferner der eingangs beschriebene dentale Implantat-Montagesatz mit einem Aufnahmegefäß bekannt. Letzteres besteht aus einem unten verschlossenen Zylinderrohr, gegen dessen offenes oberes Stirnende eine Schulter des Einbringpfostens anlegbar ist. Dies erfordert einen relativ großen Durchmesser der Schulter (mit entsprechend erschwerter Handhabung des Einbringpfostens) und erlaubt ferner keine vom Einbringpfosten unabhängige Abdichtung des steril zu haltenden Raumes um das Implantat.

Dieser Problematik will die Erfindung abhelfen. Sie besteht darin, daß der Ringbund von einem radial eingezogenen und den Querschnitt des Aufnahmegefäßes (3) auf einen etwas größeren Durchmesser als dem des zylindrischen Abschnitts verengenden Teil des Aufnahmegefäßes gebildet ist und der zylindrische Abschnitt einen geringfügig größeren Durchmesser als der des Implantats hat.

Der auf diese Weise durchweg schlanke Montagesatz, dessen größter Durchmesser - nämlich der der Schulter - den Durchmesser des Implantats nur wenig übersteigt, läßt sich mit Hilfe des reibschlüssig auf den Einbringpfosten aufgesetzten Werkzeuges entnehmen und infolge des gleichzeitig hergestellten drehfesten Eingriffs unmittelbar zu der das Implantat aufnehmenden Kieferbohrung führen. Das Implantat radial überragende Bereiche des Einbringpfostens, welche bei engen Zahnständen mit den Nachbarzähnen kollidieren könnten, existieren nicht. Auch ist der Verbrauch von teurem Werkstoff für den nur einmal verwendbaren Einbringpfosten auf ein Minimum reduziert; das im Stand der Technik verwendete Schutzröhrchen entfällt gänzlich.

Besonders vorteilhaft ist das Zusammenwirken des erfindungsgemäßen Montagesatzes mit einem Aufnahmegefäß, das aus einem endseits mittels Stopfen verschließbarem Rohr besteht, welches in Höhe des den Querschnitt verengenden Teils umlaufend radial eingezogen ist. Der im Durchmesser verengte Rohrbereich nimmt den zylindrischen Abschnitt des Einbringpfostens auf, und an seinem einen Ende legt sich die auf den zylindrischen Abschnitt folgende Schulter an, so daß der Montagesatz sicher im Aufnahmegefäß gehalten ist, wenn das entnahmeseitige Ende des Rohres von einem Stopfen verschlossen ist, welcher bevorzugt eine zentrische, dem Rohrinnern zugewandte Ausnehmung aufweist, die im Aufnahmezustand den entnahmeseitigen Endteil des Einbringpfostens umgibt.

Vorteilhaft besteht das Rohr des Aufnahmegefäßes aus Glas, welches bekannte Sterilisierungsvorteile besitzt. Es kann auch auf dem dem entnahmeseitigen Ende gegenüberliegenden Ende durch einen Stopfen verschlossen sein, und dieser hat bevorzugt eine dem Rohrinnern zugewandte Ausnehmung zur Aufnahme der Verschlußschraube für das Implantat. Auf diese Weise befindet sich der Montagesatz insgesamt und zusätzlich auch die Verschlußschraube im sterilisierten Bereich. Für den Transport ist das Aufnahmegefäß - wie herkömmlich - von einem Transportgehäuse mit versiegelbarem Deckel umgeben. Es ist aber auch möglich, das Aufnahmegefäß aus Kunststoff oder Metall, beispielsweise Titan, zu fertigen.

Ein erfindungsgemäßes Werkzeug zum Einschrauben des neuen Montagesatzes weist einen rohrförmigen Abschnitt mit einem Schlüssel-Sechskant am freien Ende der Innenwand und anschließend einen Rohrdurchmesser auf, der bei Wirkverbindung mit dem Endteil des Einbringpfostens einen Reibschluß mit diesem herstellt. Auf diese Weise läßt sich die gleichzeitig drehfeste und axial reibschlüssige Verbindung zwischen dem Werkzeug und dem Einbringpfosten bei der Entnahme des Montagesatzes aus dem Aufnahmegefäß auf einfache Weise gewährleisten. Im übrigen kann das Werkzeug weitere Abschnitte mit Querschnittskonfigurationen zum Ansetzen von Drehschlüsseln wie Ratschen o. dgl. - oder auch ein Innengewinde zur Befestigung eines Drehtellers - aufweisen.

Das erfindungsgemäße Verfahren zum Einsetzen eines Schraubimplantats besteht darin, daß nach der Entfernung des entnahmeseitigen Verschlußstopfens des Aufnahmegefäßes das Werkzeug mit seinem Endteil über den Bereich des Einbringpfostens geführt und gegen die Reibkraft zwischen diesem und der Rohrinnenwand die komplementären Sechskante in Eingriff miteinander gebracht werden, daß hierauf der Montagesatz mit dem Werkzeug aus dem Aufnahmegefäß herausgezogen und in den (mit einer Vorbohrung versehenen) Kiefer eingeschraubt wird, wonach die Schraubverbindung zwischen dem Implantat und dem Einbringpfosten gelöst und der Einbringpfosten abgezogen wird.

Die Zeichnung veranschaulicht die Erfindung an einem Ausführungsbeispiel, und zwar zeigt:
- Fig. 1: vergrößert einen in ein Aufnahmegefäß und ein Transportgehäuse eingesetzten Montagesatz (nebst Verschlußschraube) im zentralen Längsschnitt;
- Fig. 2: ein Entnahmewerkzeug in weiter vergrößerter Seitenansicht, Schnitt und Draufsicht; und
- Fig. 3: die Schrittfolge zur Entnahme des Montagesatzes aus dem Aufnahmegefäß.

In einem Transportgehäuse 1 aus beispielsweise transparentem Kunststoff, welches mit einem - in üblicher Weise versiegelten - Stopfen 2 (ebenfalls aus Kunststoff) verschlossen ist, befindet sich ein im Ganzen mit 3 bezeichnetes Aufnahmegefäß. Es besteht aus einem Glasrohr 4, dessen beidseits offene Enden mittels Verschlußstopfen 5 bzw. 6 verschlossen sind. Im Aufnahmegefäß 3 befindet sich der aus dem Einbringpfosten 7 und dem Implantat 8 bestehende Montagesatz.

Das Schraubimplantat 8 ist mit dem im wesentlichen rohrförmigen Einbringpfosten 7 durch eine in dessen Innenraum gesteckte Schraube 9 verbunden, deren Gewinde in das im Implantat vorgesehene Innengewinde 10 eingreift; letzteres dient nach dem Einsetzen des Implantats 8 in einen Kiefer zur Aufnahme des Gewindes einer Verschlußschraube 11, welche in einer Ausnehmung 12 des Verschlußstopfens 6 untergebracht ist und bereitgehalten wird.

Der Einbringpfosten 7 hat im Anschluß an einen endseitigen, in das Implantat 8 eingreifenden Zentrierbundes 13 einen zylindrischen Abschnitt 14 mit einer sich in Entnahmerichtung anschließenden Schulter 15. Im (dargestellten) eingesetzten Zustand befindet sich der zylindrische Abschnitt 14 innerhalb eines Durchlasses 1 6 im Rohr 4, welcher dort durch den Innenumfang eines verengten Teils 17 gebildet ist. Die Schulter 15 liegt oberhalb des Durchlasses 16 an der verengten Wandung des Rohres 4 an.

Weiter in Entnahmerichtung folgt auf die Schulter 1 5 ein Bereich 18 des Einbringpfostens 7, welcher aus einem Schlüssel-Sechskant 19 und einem längsgeschlitzten (Schlitz 21) Endteil 20 besteht. Letzteres hat an seinem freien Ende eine ringförmige Durchmesserverdickung 22.

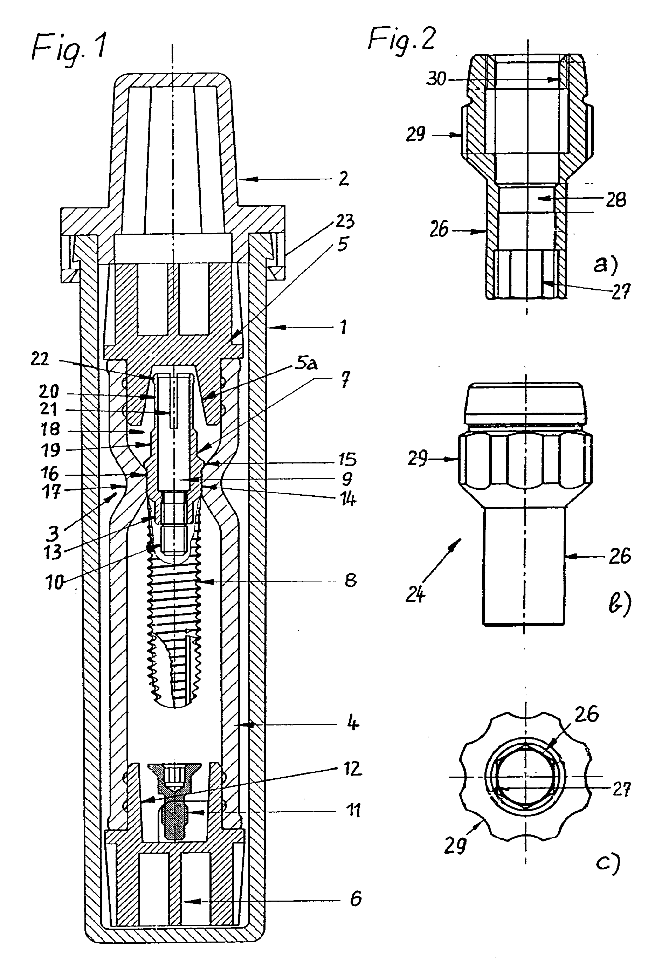

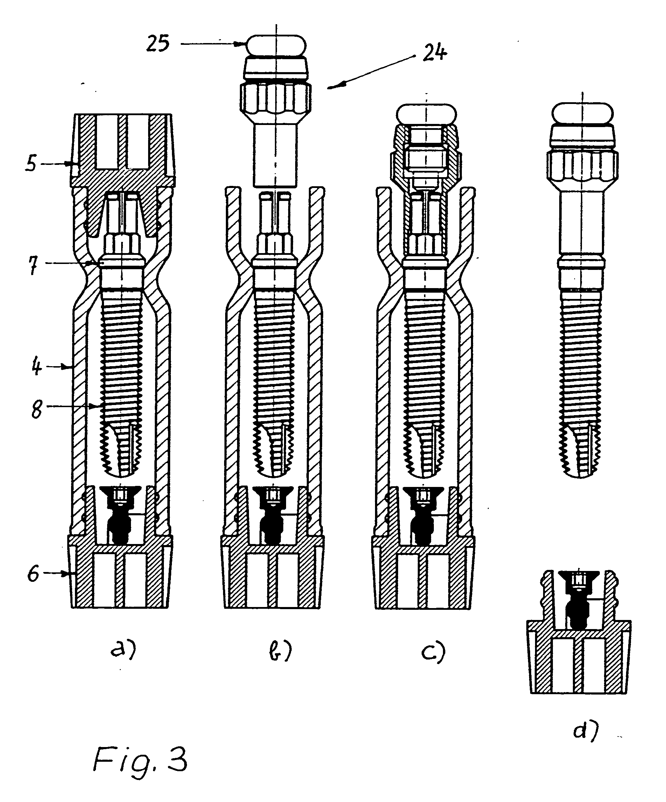

Wenn das Implantat 8 in einen Kiefer eingesetzt und fixiert werden soll, wird zunächst der Deckel 2 - unter Aufbrechen des Siegels 23 - vom Transportgehäuse entfernt und das Aufnahmegefäß 3 entnommen (Fig. 3 a). Alsdann wird das Aufnahmegefäß 3 durch Abnehmen des Verschlußstopfens 5 geöffnet, und gemäß Fig. 3 b wird ein Werkzeug in Form des in Fig. 2 stark vergrößert dargestellten Einbringschlüssels 24 über den Bereich 18 des Einbringpfostens 7 geführt, der mit dem Implantat 8 als Montagesatz nach wie vor im Rohr 4 gehalten ist (in Fig. 3 b ist in den Einbringschlüssel 24 bereits ein Drehteller 25 eingeschraubt worden). Dabei gelangt der Schlüssel-Sechskant 19 des Einbringpfostens 7 in Eingriff mit dem rohrförmigen Abschnitt 26 des Einbringschlüssels 24, welcher an seinem freien Ende innenseitig einen dem Sechskant 19 entsprechenden Sechskant 27 aufweist. Gleichzeitig legt sich die ringförmige Durchmesser-Verdickung 22 am freien Ende des Einbringpfostens 7 aufgrund entsprechenden Durchmesser-Verhältnisses an die geringfügig gestufte, an den Sechskant 27 anschließenden Abschnitt 28 der Innenwandung des rohrförmigen Abschnitts 26 des Einbringschlüssels 24 an. Der dadurch entstehende Reibschluß zwischen dem Einbringpfosten 7 und dem Einbringschlüssel 24 erlaubt es, mit letzterem den Montagesatz aus dem Rohr 4 des Aufnahmegefäßes 3 in axialer Entnahmerichtung herauszuziehen (Fig. 3 d). Ohne einen weiteren Zwischenschritt kann dann das Implantat 8 in die Vorbohrung des Kiefers eingeschraubt werden, und zwar entweder von Hand mittels eines auf den Abschnitt 29 des Einbringschlüssels 24 (Fig. 2 b und c) aufgesetzten Drehschlüssels (Ratsche o. dgl.), ggf. unter Zuhilfenahme des Drehtellers 25, oder auch maschinell.

Nach Beendigung des Einschraubvorganges wird die Schraube 9, welche das Implantat 8 mit dem Einbringpfosten 7 zum Montagesatz verbindet, mit Hilfe eines entsprechenden Schlüssels gelöst und entfernt. Zu diesem Zweck wird der Einbringschlüssel 24 vom Einbringpfosten 7 abgezogen; es ist jedoch auch möglich - gegebenenfalls nach Entfernen des Drehtellers 25 aus dem Innengewinde 30 des Einbringschlüssels 24 - den Schlüssel für die Schraube 9 durch den Einbringschlüssel 24 hindurch mit der Schraube 9 in Eingriff zu bringen und den Einbringpfosten 7 gemeinsam mit dem Einbringschlüssel 24 vom eingeschraubten Plantat 8 abzuziehen. Abschließend wird die Verschlußschraube 11 der Ausnehmung 7 des Stopfens 6 entnommen und in das Innengewinde 10 des Implantats 8 eingeschraubt, um das Gewinde 10 bis zum späteren - nach dem Einwachsen des Implantats 8 erfolgenden - Aufschrauben der Dentalprothese zu schützen und sauberzuhalten.

## Patentansprüche

1. Werkzeug zum Einschrauben eines
Montagesatzes mit einem Dentalimplantat zur Befestigung von Zahnersatz am Kiefer, bei dem das Implantat mittels einer zentrischen Verschraubung mit einem Einbringpfosten verbunden ist, welcher Mittel zu seiner Halterung in einem das Implantat konzentrisch umgebenden Aufnahmegefäß aufweist, die aus einem zylindrischen Abschnitt und einer in Entnahmerichtung anschließenden Schulter bestehen, welch letztere in Anlage an einen Ringbund des Aufnahmegefäßes formschlüssig anlegbar ist,
wobei sich weiter in Entnahmerichtung an die Schulter ein Bereich des Einbringpfostens anschließt, der mit einem dem Einsetzen des Implantats dienenden Werkzeug in zugleich drehfesten Formschluss und axialen Reib- und/oder Formschluss bringbar ist,
wobei der Ringbund von einem radial eingezogenen und den Querschnitt des Aufnahmegefäßes (3) auf einen etwas größeren Durchmesser als dem des zylindrischen Abschnitts verengenden Teil (17) des Aufnahmegefäßes (3) gebildet ist und der zylindrische Abschnitt (14) einen geringfügig größeren Durchmesser als der des Implantats (8) hat.
**dadurch gekennzeichnet, dass** das Werkzeug einen rohrförmigen Abschnitt (26) mit einem Schlüssel-Sechskant (27) am freien Ende der Innenwand und anschließend einen Rohrinnendurchmesser aufweist, der bei Wirkverbindung mit dem Endteil (20) des Einbringpfostens (7) einen Reibschluss mit diesem herstellt.

2. Werkzeug nach Anspruch 1,
**dadurch gekennzeichnet, dass** sich an den rohrförmigen Abschnitt (26) ein koaxialer Abschnitt (29) mit einer Außenumfangskonfiguration anschließt, welche eine drehfeste Eingriffsverbindung mit einem Drehschlüssel erlaubt.

3. Werkzeug nach Anspruch 2,
**dadurch gekennzeichnet, dass** der koaxiale Abschnitt (29) ebenfalls rohrförmig ist und ein Innengewinde (30) zur Befestigung eines Drehtellers (25) aufweist.

4. Montagesatz mit einem Dentalimplantat zur Befestigung von Zahnersatz am Kiefer, bei dem das Implantat mittels einer zentrischen Verschraubung mit einem Einbringpfosten verbunden ist, welcher Mittel zu seiner Halterung in einem das Implantat konzentrisch umgebenden Aufnahmegefäß aufweist, die aus einem zylindrischen Abschnitt und einer in Entnahmerichtung anschließenden Schulter bestehen, welch letztere in Anlage an einen Ringbund des Aufnahmegefäßes formschlüssig anlegbar ist,
wobei sich weiter in Entnahmerichtung an die Schulter ein Bereich des Einbringpfostens anschließt, der mit einem dem Einsetzen des Implantats dienenden Werkzeug in zugleich drehfesten Formschluss und axialen Reib- und/oder Formschluss bringbar ist,
**dadurch gekennzeichnet, dass** der Ringbund von einem radial eingezogenen und den Querschnitt des Aufnahmegefäßes (3) auf einen etwas größeren Durchmesser als dem des zylindrischen Abschnitts verengenden Teil (17) des Aufnahmegefäßes (3) gebildet ist und der zylindrische Abschnitt (14) einen geringfügig größeren Durchmesser als der des Implantats (8) hat.

5. Montagesatz nach Anspruch 4,
**dadurch gekennzeichnet, dass** der Bereich (18) des Einbringpfostens (7) aus einem Schlüssel-Sechskant (19) und einem achsparallel längsgeschlitzten (Schlitz 21) rohrförmigen Endteil (20) mit einer ringförmigen Durchmesser-Verdickung (22) am freien Ende besteht.

6. Aufnahmegefäß für einen Montagesatz nach Anspruch 4 oder 5,
**dadurch gekennzeichnet, dass** es aus einem endseits mittels Stopfen (5, 6) verschließbaren Rohr (4) besteht, welches in Höhe des den Querschnitt verengenden Teils (17) umlaufend radial eingezogen ist.

7. Aufnahmegefäß nach Anspruch 6,
**dadurch gekennzeichnet, dass** das Rohr (4) aus Glas besteht.

8. Aufnahmegefäß nach Anspruch 6 oder 7,
**dadurch gekennzeichnet, dass** der das entnahmeseitige Ende des Rohres (4) verschließende Stopfen (5) eine zentrische, dem Rohrinnern zugewandte Ausnehmung (5a) aufweist, die im Aufnahmezustand den entnahmeseitigen Endteil (20) des Einbringpfostens (7) umgibt.

9. Aufnahmegefäß nach einem der Ansprüche 6 bis 8,
**dadurch gekennzeichnet, dass** auch das der Entnahmeseite gegenüberliegende Ende des Rohres (4) einen Verschlussstopfen (6) aufnimmt und dieser eine dem Rohrinnern zugewandte Ausnehmung (12) zur Aufnahme einer Verschlussschraube (11) für das Implantat (8) aufweist.

10. Verfahren zum Einsetzen eines Schraubimplantats mittels eines Montagesatzes gemäß Anspruch 1 oder 2, das in einem Aufnahmegefäß gemäß einem der Ansprüche 3 bis 6 gehalten ist, sowie mittels eines Werkzeuges gemäß einem der Ansprüche 7 bis 9,
**dadurch gekennzeichnet, daß** nach der Entfernung des entnahmeseitigen Verschlußstopfens (5) des Aufnahmegefäßes (3) das Werkzeug (24) mit seinem Endteil (26) über den Bereich (18) des Einbringpfostens (7) geführt und gegen die Reibkraft zwischen diesem und der Rohrinnenwand die komplementären Sechskante (19,27) in Eingriff miteinander gebracht werden,
daß hierauf der Montagesatz mit dem Werkzeug aus dem Aufnahmegefäß herausgezogen und in den (mit einer Vorbohrung versehenen) Kiefer eingeschraubt wird,
wonach die Schraubverbindung zwischen dem Implantat und dem Einbringpfosten gelöst und der Einbringpfosten abgezogen wird.
